# EUROPEAN PATENT APPLICATION

(11) **EP 4 293 446 A1**
(43) Date of publication of application: **20.12.2023**
(21) Application number: 23177273.2
(22) Date of filing: 05.06.2023
(51) Int. Cl.: G05B 19/402, G05B 19/4065

(54) **MACHINE TOOL AND METHOD OF MACHINING A WORKPIECE**

(30) Priority: 15.06.2022 JP 2022096663
(71) Applicant: Star Micronics Co., Ltd., Shizuoka-shi, Shizuoka 422-8654 (JP)
(72) Inventor: Uchiyama, Takuji, Shizuoka (JP)
(74) Representative: Grünecker Patent- und Rechtsanwälte PartG mbB

(57) **Abstract**

A machine tool capable of preventing production of a defective product. The processing unit 52 determines whether the workpiece exists in the predetermined area. In the event that the workpiece exist in the area, the processing unit 52 execute the top cut process. In the event that the workpiece does not exist in the area, the processing unit 52 determines that the workpiece is in the abnormal position.

## Description

### CROSS-REFERENCE TO RELATED APPLICATIONS

This application claims priority of Japanese Patent Application No. 2022-096663 filed on June 15, 2022. The contents of this application are incorporated herein by reference in their entirety.

### BACKGROUND OF THE INVENTION

The present invention relates to a machine tool and a method of machining a workpiece.

Japanese Unexamined Patent Application Publications No. 2021-53713 discloses an NC (numerically control) lathe provided with a bar feeder capable of supplying a bar material or a workpiece to a spindle of the lathe. Machining accuracy of the workpiece depends on positioning accuracy of the tip or the end of the workpiece.

Conventionally, the end of every brand new workpiece supplied to the spindle is cut off with a cut-off tool (an operation called "top-cut") to position the end surface of the workpiece with precision.

### SUMMARY

When a supply error occurs, cutting off the end of the workpiece will fail, thus deteriorating positioning accuracy of the end surface of the workpiece.

The present invention provides a machine tool capable of solving the problem.
1. A machine tool includes a spindle capable of rotating a bar workpiece around its axis; a cutter capable of cutting the workpiece at a surface perpendicular to the axis; a sensor capable of detecting an object existing in an area where the cutter is located to cut the workpiece; and a controller adapted to execute an abnormality detection process prior to a top cut process of the workpiece. The abnormality detection process includes an abnormality determination process capable of determining that the object does not exist in the area according to a detection value of the sensor and thereby determining that the machine tool is not ready for the top cut process.

The top cut process can be executed only in the event that the workpiece exists in the predetermined area. The controller may determine, prior to the top cut process, whether the workpiece exists in the area in the abnormality detection process according to a detection value of the sensor. If abnormality is detected, the controller may stop the top cut process happening, thus preventing production of a defective product.

The "prior to the top cut process" may include "during the top cut process".
2. In the machine tool according to 1 as described above, the controller is adapted to execute a retry process in the event that the abnormality detection process reveals occurrence of abnormality. The retry process includes a process of displacing the workpiece in a predetermined direction by a predetermined amount. The predetermined directon is a direction that the workpiece approaches the area where the cutter is located to cut the workpiece. The abnormality detection process further includes another abnormality determination process capable of determining whether the object exists in the area after the retry process according to a detection value of the sensor.

The retry process can modify the position of the workpiece to an appropriate position for the top cut process. Especially during nighttime unmanned continuous operation, the retry process could allow the whole process to continue without suspension.

3. In the machine tool according to 2 as described above, the controller is adapted to execute a number of retries setting process. The number of retries setting process includes a process of receiving a user instruction of the number of retries through an interface. The number of retries is an upper limit of the number of retries of the abnormal detection process and the retry process. The controller is adapted to repeat the retry process within the upper limit until the abnormality detection process reveals no occurrence of abnormality.

The number of retries setting process allows the user to set a desired value for the number of retries.
4. In the machine tool according to 2 or 3 as described above, the controller is adapted to execute a displacement amount setting process. The displacement amount setting process includes a process of receiving a user instruction of a displacement amount of the workpiece through an interface. The retry process includes a process of displacing the workpiece by the displacement amount received in the displacement amount setting process.

The displacement amount setting process allows the user to set a desired value for the displacement amount.
5. In the machine tool according to any of 2 to 4 as described above, the controller is adapted to execute an abnormality measures process in the event that the abnormality detection process reveals occurrence of abnormality after the retry process. The abnormality measures process includes a process of outputting an alarm and shutting off a working machine comprising the cutter and the spindle.

The abnormality measures process after the retry process allows the user to be notified of abnormality and prevents execution of subsequent processes.

6. In the machine tool according to any of 1 to 5 as described above, the cutter includes a cut-off tool and a sensor capable of detecting the object existing in the area where the cut-off tool is located to cut the workpiece. The controller is adapted to execute a cut-off tool breakage detection process after a cut-off process to determine that the cut-off tool is broken in the event that the sensor detects the object exists in the area.

The sensor for use in the cut-off tool breakage detection process is available for the workpiece position abnormality detection process, thus eliminating the need for a separate sensor.
7. In the machine tool according to any of 1 to 6 as described above, the controller includes an executing apparatus and a storage apparatus. The controller is adapted to receive a machining program input by a user through an interface. The storage apparatus stores a plurality of code data. The machining program is a selective combination of the code data to instruct the executing apparatus to control a working machine comprising the cutter and the spindle. The code data includes a code for instructing the executing apparatus to execute the abnormality detection process.

Accordingly, the machining program may include the instruction for executing the abnormality detection process.

A plurality of code data may include a code for instructing the executing apparatus to execute the retry process. A plurality of code data may include a code for instructing the executing apparatus to execute the cut-off tool breakage detection process.

8. In the machine tool according to any of 1 to 7 as described above, the sensor includes a detector capable of outputting a singal according to the detection value when the detector is displaced into the area where the cutter is located to cut the workpiece.

It can be determined whether an object exists in the predetermined area according to a detection result by the sensor. In the event that it is determined that an object exists in the predetermined area, it can be then determined that the object exists in the area where the cutter is located to cut the workpiece.

Displacing the detector into the predetermined area can facilitate such determination according to an output signal from the sensor.

The abnormality detection process using the sensor can be executed prior to top-cut. The cutter may include the cut-off tool and the sensor may be provided with the detector. The sensor may output a signal according to existence of the object in the predetermined area by displacing the detector into the predetermined area. The predetermined area may be defined by a component of a first coordinate axis greater than a value of the area where the cut-off tool is located to cut the workpiece, a component of a second coordinate axis containing the value of the component of the second coordinate axis of the workpiece, and a component of a third coordinate axis containing the value of the component of the third coordinate axis of the workpiece. The first coordinate axis includes the axis of the workpiece. The component of the first coordinate axis includes a positive component in a direction that the workpiece approaches the cut-off tool. The second coordinate axis and the third coordinate axis may be perpendicular to each other and perpendicular to the first coordinate axis.
9. In the machine tool according to any of 1 to 7 as described above, the sensor includes a non-contact sensor capable of detecting the object existing in the area where the cutter is located to cut the workpiece.
10. A method of machining a workpiece including executing the processes in the machine tool of according to any of 1 to 9 as described above.

### BRIEF DESCRIPTION OF THE DRAWINGS

FIG. 1 shows the configuration of a machining system of an embodiment.
FIG. 2 shows the configuration of a tool post of the embodiment.
FIG.3A shows the behavior of a cut-off tool breakage detection apparatus.
FIG.3B shows the behavior of a cut-off tool breakage detection apparatus.
FIG. 4 is a flow chart of a cut-off tool breakage detection code of the embodiment.
FIG. 5A is a side view exemplifying a process prior to a top cut process.
FIG. 5B is a side view exemplifying a process prior to the top cut process.
FIG. 5C is a side view exemplifying a process prior to the top cut process.
FIG. 6A is a side view exemplifying the top cut process.
FIG. 6B is a side view exemplifying the top cut process.
FIG. 7 is a flow chart of a workpiece position abnormality detection code of the embodiment.
FIG. 8 is a flow chart of a parameters setting process in the workpiece position abnormality detection code of the embodiment.
FIG. 9 is an example of a process procedure using a machining program of the embodiment.
FIG. 10 is an example of a process procedure using a machining program of a comparative example.
FIG. 11A shows a sensor of a modified embodiment.
FIG. 11B shows a sensor of the modified embodiment.
FIG. 12 shows a sensor of the modified embodiment.
FIG. 13 shows a working machine of the modified embodiment.
FIG. 14 shows a working machine of the modified embodiment.

### DETAILED DESCRIPTION

The embodiment is being described referring to the drawings.

### [Configuration of the machining system]

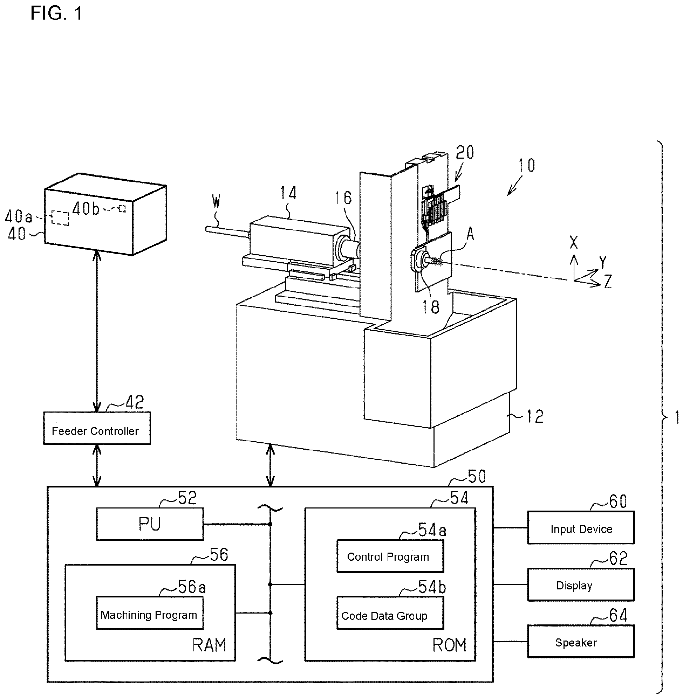

FIG. 1 shows the configuration of the machining system of the embodiment.

A lathe 1 may include a working machine 10 and a machining controller 50. The working machine 10 may include an apparatus capable of cutting a bar material or a workpiece W. The working machine 10 may include a spindle 14 mounted on a bed 12. The spindle 14 may rotate the workpiece W around an own axis as the rotation axis. The spindle 14 may be provided with a chuck 16 capable of holding the workpiece W. The spindle 14 may be displaced in positive and negative directions of a Z-axis shown in FIG. 1. The Z-axis may be an axis containing the axis of the workpiece W inserted into the spindle 14. The Z-axis may horizontally extend.

The working machine 10 may have a guide bush 18 capable of supporting the workpiece W on the positive side of the spindle 14 with respect to the Z-axis. The working machine 10 may be provided with a tool post 20. The tool post 20 may have a turning tool capable of machining the workpiece W protruded from the guide bush 18. The tool post 20 may be displaced in directions of a Y-axis and an X-axis shown in FIG. 1. The direction of the Y-axis may be horizontal and perpendicular to the direction of the Z-axis. The direction of the X-axis may be perpendicular to the directions of the Z-axis and the Y-axis.

A bar feeder 40 may supply the workpiece W to the working machine 10. The bar feeder 40 may displace the workpiece in the positive direction with respect to Z-axis to thereby insert the workpiece W into the spindle 14. The bar feeder 40 may be provided with an actuator 40a and an end-detection sensor 40b. The actuator 40a may push the workpiece W toward the positive direction. The end-detection sensor 40b may detect a displacement amount of the workpiece W.

A feeder controller 42 may operate the bar feeder 40 to control a supply of the workpiece W to the working machine 10 according to a detection result by the end-detection sensor 40b.

The machining controller 50 may control the working machine 10. The controller 50 may control a Z-axis coordinate of the spindle 14 and X-axis and Y-axis coordinates of the tool post 20. The controller 50 may include a PU (Processing Unit) 52, a ROM (Read Only Memory) 54 and a RAM (Random Access Memory) 56. The PU 52 may include a software processing apparatus such as a CPU (Central Processing Unit), GPU (Graphics Processing Unit), and TPU (Tensor Processing Unit). The ROM 54 may include an electrically-non-rewritable memory. The RAM 56 may include an electrically-rewritable non-volatile memory and a storage medium such as a disk.

The ROM 54 may store a control program 54a and a code data group 54b. The RAM 56 may store a machining program 56a. The code data group 54b may include plural code data. The code data may include instructions causing the PU 52 to execute each and every process constituting various machining processes for the workpiece W. The machining program 56a may be a program represented by a combination of plural code data of the code data group 54b. The machining program 56a may define the processes to be executed by the PU 52 to have the workpiece W machined as desired by a user. The machining program 56a may be input by the user through an input device 60 and displayed in a display 62. The control program 54a may include an instruction causing the PU 52 to execute the machining program 56a and an instruction for controlling the display 62.

### [Detailed function of the lathe]

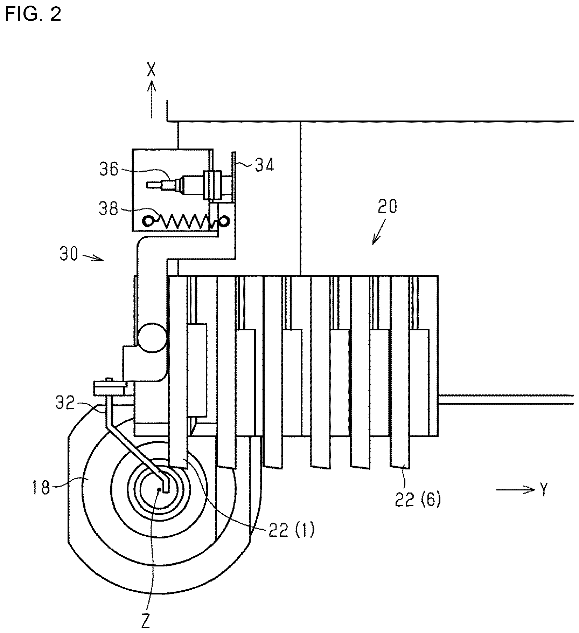

FIG. 2 shows the configuration of the tool post 20. The tool post 20 may have plural cutting tools 22 (1) to 22 (6) attached thereto. The cutting tools 22 (1) to 22 (6) may be collectively referred to as the cutting tool 22. The tool 22 (1) may be a cut-off tool. The cut-off tool 22 (1) may sever the workpiece W with a cut surface thereof being perpendicular to the Z-axis.

The tool post 20 may be provided with a cut-off tool breakage detection apparatus 30. The breakage detection apparatus 30 may include a detection probe 32, an object 34, a contact sensor 36, and a resilient member 38. The detection probe 32 and the object 34 may be coupled. The resilient member 38 may push the object 34 to the contact sensor 36. The contact sensor 36 may output a signal according to the contact state of the object 34. The contact sensor 36 may include a differential transformer sensor, an optical scale sensor, and a magnet scale sensor.

### [Breakage detection of cut-off tool]

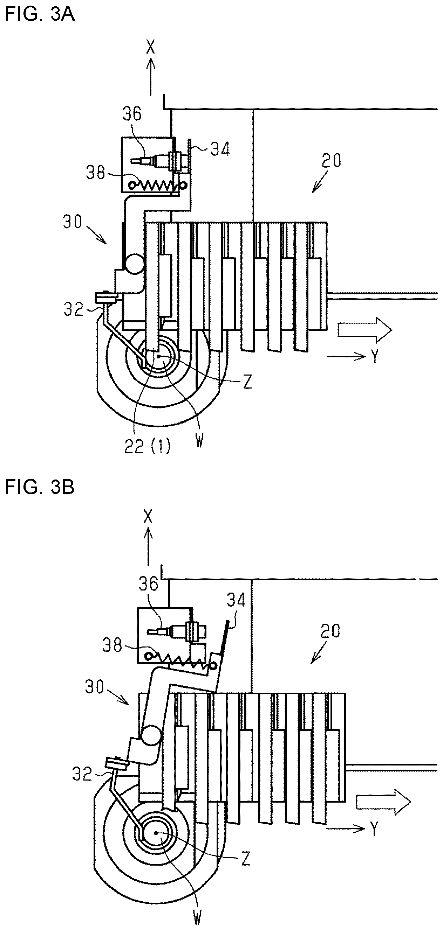

FIG. 3A and FIG. 3B each shows a breakage detection of the cut-off tool 22 (1). FIG. 3A shows the state of normal cut-off completion. The end of the workpiece W may be in a position of a smaller Z-coordinate than the cut-off tool 22 (1). The probe 32 does not touch the workpiece W when the tool post 20 is displaced in the positive direction of the Y axis.

FIG. 3B shows the state of abnormal cut-off completion because of breakage of the cut-off tool 22 (1). Displacing the tool post 20 in the positive direction of the Y-axis would bring the probe 32 to touch the workpiece W and thereby apply force to the probe 32 in the negative direction of the Y-axis, thus bringing the object 34 away from the contact sensor 36 against resilient force of the resilient member 38.

The contact sensor 36 may thereby detect a contact state with respect to the object 34 according to breakage of the cut-off tool 22 (1).

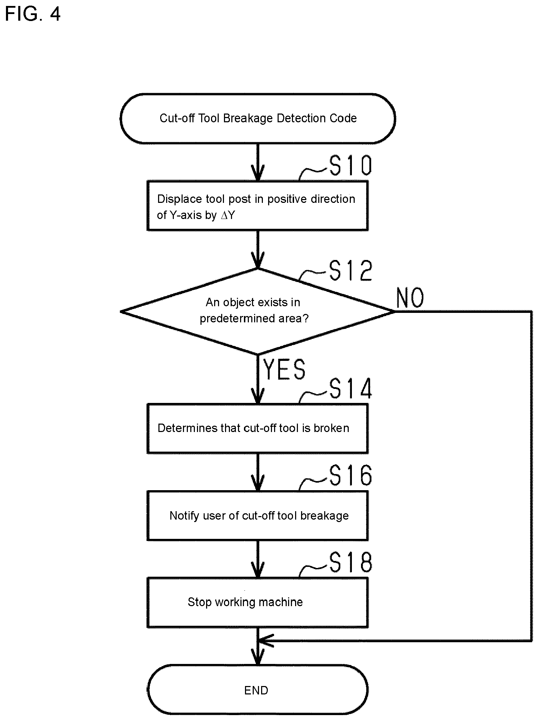

FIG. 4 shows a flowchart of the cut-off tool breakage detection code to be executed following execution of the cut-off. The cut-off tool breakage detection code described in the machining program 56a may be executed by the PU 52 under the control program 54. The flowchart shows each process by a step number beginning with a letter "S."

First, the PU 52 may displace the tool post 20 in the positive direction of the Y-axis by a predetermined amount ΔY (S10) to bring the probe 32 of the breakage detection apparatus 30 into a predetermined area A shown in FIG. 1. The Z-axis coordinate component of the predetermined area A may be a predetermined value or more. The predetermined value of the Z-axis coordinate component of the predetermined area A may be the minimum of the Z-axis coordinate component of the cut-off tool 22 (1). The Z-axis coordinate component of the predetermined area A may range from 2 times to 5 times or less the difference of the minimum and the maximum of the Z-axis coordinate components of the cut-off tool 22 (1). The Z-axis coordinate component of the predetermined area A may be 20 times or less the difference of the minimum and the maximum of the Z-axis coordinate components of the cut-off tool 22 (1). The Y-axis coordinate component of the predetermined area A may contain a value of the Y-axis coordinate component of the axis of the workpiece W. FIG. 1 shows that the Y-axis coordinate component of the predetermined area A contains all the values of the Y-axis coordinate components of the workpiece W. The X-axis coordinate component of the predetermined area A may contain the value of the X-axis coordinate component of the axis of the workpiece W. FIG. 1 shows that the X-axis coordinate component of the predetermined area A contains all the values of the X-axis coordinate components of the workpiece W.

Then the PU52 may determine whether an object exists in the predetermined area A according to the detection result of the contact sensor 36 (S12). FIG. 3A shows the state an object does not exist in the predetermined area A. FIG. 3B shows the state an object exists in the predetermined area A. Specifically, the PU 52 may determine whether an object exists in the specific portion where entry of the probe 32 is allowed. The Z-axis coordinate component of the specific portion of the predetermined area A may be only part of the Z-axis coordinate component of the predetermined area A. In the event that an object exists in the predetermined area (S12: YES), the PU 52 may determine that the cut-off tool 22 (1) is broken (S14). The PU 52 may operate a speaker 64 shown in FIG. 1 to output an alarm, thereby notifying the user of the breakage (S 16). The PU 52 may stop the working machine 10 (S18), thus shutting off power supply to a spindle motor for the spindle 14 and to a tool post actuator for the tool post 20.

The PU 52 may finish the FIG. 4 process upon completing Step S18 or upon determining that an object does not exist in the predetermined area (S12: NO).

### [TOP CUT OPERATION]

The cut-off tool 22 (1) may be also used to cut off the end of a fresh workpiece W just supplied from the bar feeder 40 for positioning purpose. Displacement amount of the workpiece W held by the chuck 16 can be defined with accuracy by that of the spindle 14. It might be, however, difficult to precisely position the end of the fresh workpiece W just supplied from the bar feeder 40 with deteriorated end detection accuracy. Executing the top-cut can define with accuracy the position of the end of the fresh workpiece W. The Z-axis coordinate component of the end of the workpiece W upon completion of top-cut may be equal to a value of the Z-axis coordinate component of the cut surface by the cut-off tool 22 (1).

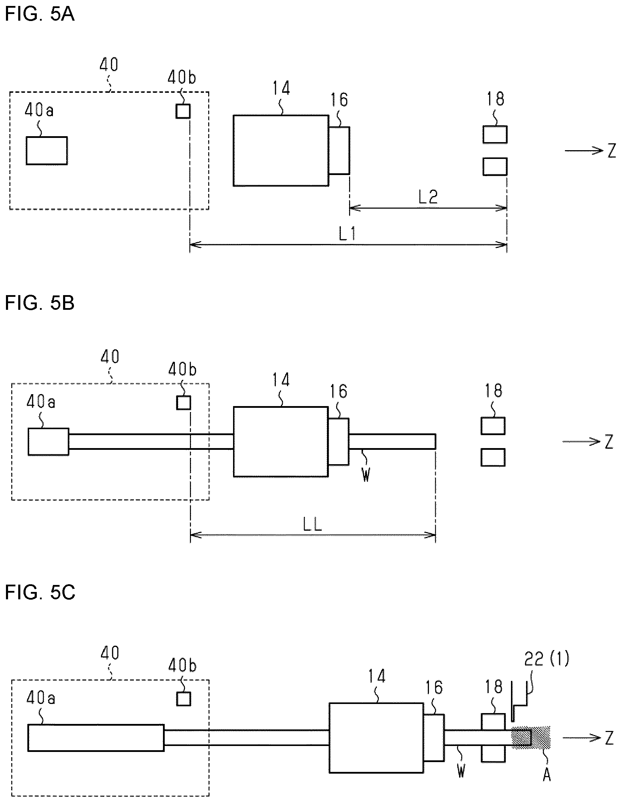

FIG. 5A, 5B, and 5C collectively show supply control of the fresh workpiece W by the bar feeder 40 for the purpose of top-cut. FIG. 5A shows positional relationship of the spindle 14 and others before the start of supply control by the bar feeder 40. The Z-axis coordinate component of the spindle 14 may be a smaller value. The distance L2 from the chuck 16 to the guide bush 18 may be previously determined. The distance L1 from the end detector 40b to the guide bush 18 may be previously determined. Thus, the feeder controller 42 may previously know the value of the distance L1 minus the distance L2.

FIG. 5B shows the state the bar feeder 40 has fed the workpiece W in the positive direction of the Z-axis by a predetermined amount LL from the end detector 40b. The end of the workpiece W may protrude beyond the chuck 16 in the positive direction of the Z-axis to be held by the chuck 16.

FIG. 5C shows the state that the spindle 14 has been displaced in the positive direction of the Z-axis with the end of the workpiece W protruding beyond the guide bush 18 to enter the predetermined area A where the top-cut may be executed.

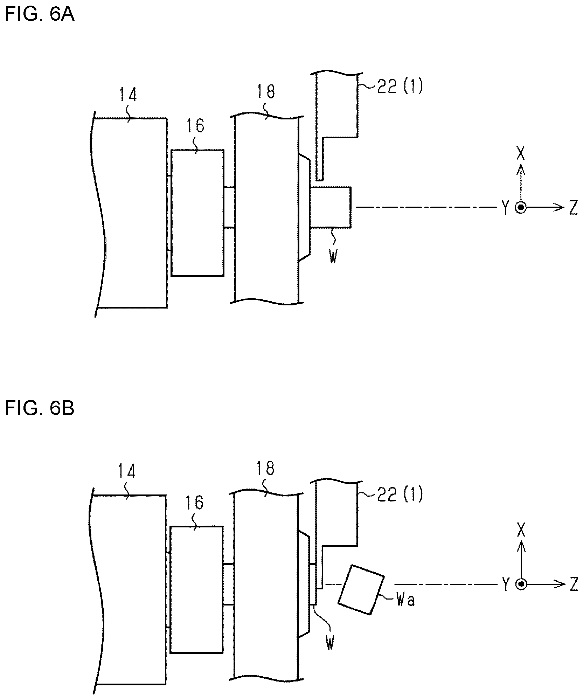

FIG. 6A is an expanded view of part of FIG. 5C. The end of the workpiece W protrudes beyond the guide bush 18.

FIG. 6B shows the state of cut-off completion. Displacing the tool post 20 in the negative direction of the X-axis may enable the cut-off tool 22 (1) to sever the workpiece W. FIG. 6B shows a cut piece Wa severed from the workpiece W. The Z-axis coordinate component of the end of the workpiece W may be equal to the minimum of the Z-axis coordinate components of the cut-off tool 22 (1).

The top-cut above described could fail if the Z-axis coordinate component of the end of the workpiece W equals the Z-axis coordinate component of the cut-off tool 22 (1) or lower. The embodiment provides a code that determines whether an abnormal condition exists prior to commencing cut-off.

### [Workpiece position abnormality detection code for top-cut]

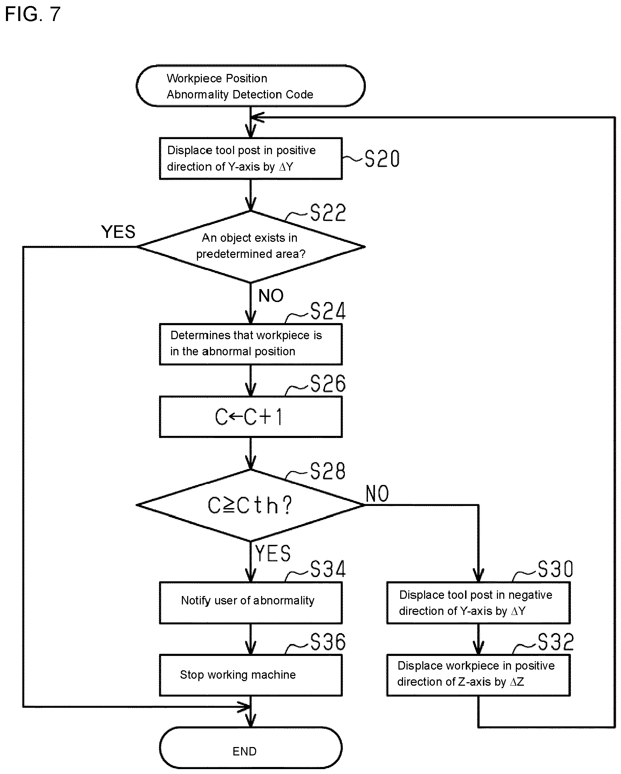

FIG. 7 shows a flowchart of the workpiece position abnormality detection code included in the code data group 54b. The workpiece position abnormality detection code may determine whether the workpiece W is in the normal position before commencing top-cut. The workpiece position abnormality detection code described in the machining program 56a may be executed by the PU 52 under the control program 54a.

First, the PU 52 may displace the tool post 20 in the positive direction of the Y-axis by a predetermined amount ΔY (S20). Then, the PU 52 may determine whether an object exists in the predetermined area A by receiving a signal from the contact sensor 36 (S22). In the event that there exists no object in the predetermined area A (S22: NO), the PU 52 may determine that the workpiece W is in the abnormal position (S24). In other words, the PU 52 may determine that executing top-cut could end with an abnormal result.

Then the PU 52 may increment a retry counter C by 1 (one) (S26). The retry counter C may be 0 (zero) by default. The PU 52 may then determine whether the retry counter C equals the number of retries Cth or more (S28). In the event that the retry counter C is less than the number of retries Cth (S28: NO), the PU 52 may displace the tool post 20 in the negative direction of the Y-axis by a predetermined amount ΔY (S30) to bring the probe 32 out of the predetermined area A.

The PU 52 may then displace the workpiece W in the positive direction of the Z-axis by a predetermined amount ΔZ (S32) and then resume the process from Step S20. In the event that the retry counter C equals the number of retries Cth or more (S28: YES), the PU 52 may operate the speaker 64 to output an alarm, thereby notifying the user of abnormality (S34). The PU 52 may stop the working machine 10 (S36), thus shutting off power supply to the spindle motor and to the displacement actuator for the spindle 14 and the tool post 20.

The PU 52 may finish the FIG. 7 process upon completing Step S36 or upon determining that an object exists in the predetermined area (S22: YES). The number of retries Cth and the displacement amount ΔZ may be predetermined by a user.

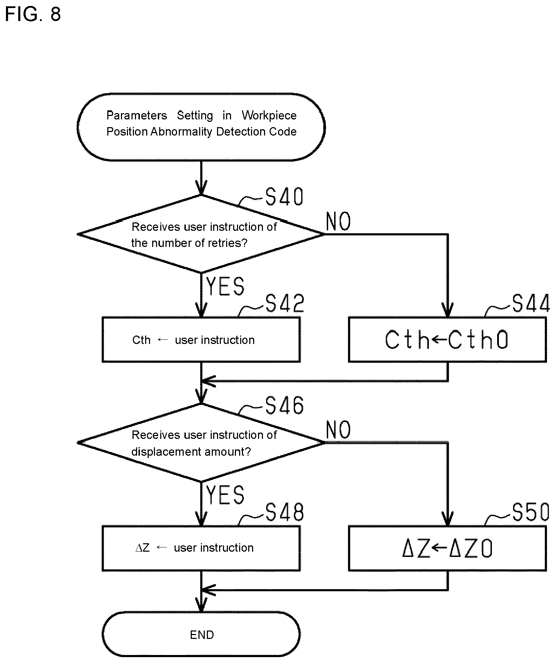

FIG. 8 is a flowchart of a parameters setting process of the number of retries Cth and the displacement amount ΔZ. The process may be executed by the PU 52 under the control program 54 each time, for example, predetermined requirements are satisfied.

First, the PU 52 may determine whether an input device 60 has received a user instruction of the number of retries (S40). In the event that the input device 60 has received a user instruction of the number of retries (S40: YES), the PU 52 may substitute the user instruction for the number of retries Cth (S42). In the event that the input device 60 has received no instruction (S40: NO), the PU 52 may substitute the default Cth0 for the number of retries Cth (S44).

Upon completion of S42 or S44, the PU 52 may determine whether the input device 60 has received a user instruction of the displacement amount ΔZ for the workpiece W (S46). In the event that the input device 60 has received a user instruction of the displacement amount ΔZ (S46: YES), the PU 52 may substitute the user instruction for the displacement amount ΔZ (S48). In the event that the input device 60 has received no instruction (S46: NO), the PU 52 may substitute the default ΔZ for the displacement amount ΔZ (S50).

The PU 52 may finish the FIG. 8 process upon completion of S48 or S50.

### [An example of flowchart of the machining program of the embodiment]

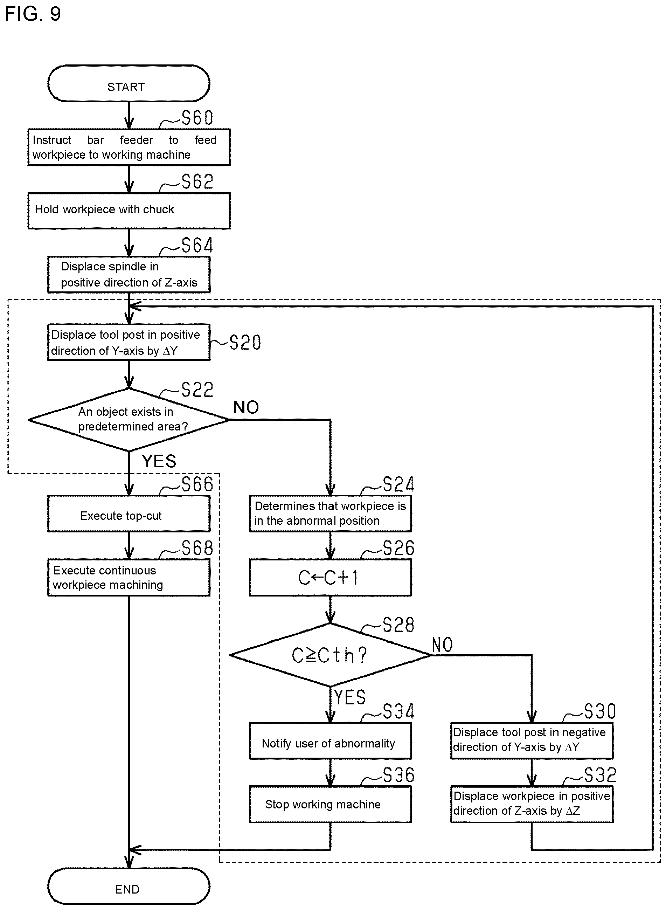

FIG. 9 is a flowchart of the machining process in accordance with the machining program 56a incorporating the workpiece position abnormality detection code shown in FIG. 7. The machining program 56a may be executed by the PU 52 under the control program 54a.

First, the PU 52 may instruct the feeder controller 42 to control the bar feeder 40 to feed the workpiece W to the working machine 10 (S60). The PU 52 may then instruct the chuck 16 to hold the workpiece W (S62) as shown in FIG. 5B. The PU 52 may then displace the spindle 14 in the positive direction of the Z-axis by a predetermined amount (S64) as shown in FIG. 5C.

The PU 52 may then execute the FIG. 7 process. In the event that there exists an object in the predetermined area (S22: YES), the PU 52 may execute top-cut (S66) and then continuously operate the working machine 10 (S68) in accordance with the machining program 56a to produce plural products from the single workpiece W. The process may include repeated series of operations; machining the end of the workpiece W and cutting off the workpiece W whose cut surface being distant from the end of the workpiece by a predetermined length. The repeated series of operations may desirably include the cut-off tool breakage detection process (FIG. 4) to be executed after each and every cutting off.

The PU 52 may finish the FIG. 9 process upon completion of S68 or S36.

### [An example of flowchart of the machining program of the embodiment]

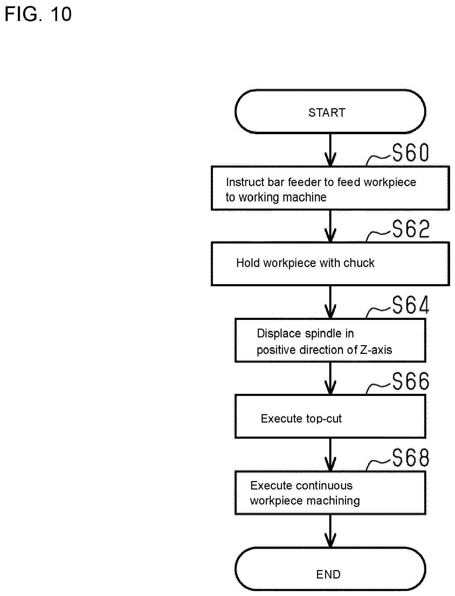

FIG. 10 is a flowchart of the machining process in accordance with the machining program 56a not incorporating the workpiece position abnormality detection code shown in FIG. 7. The machining program 56a may be executed by the PU 52 under the control program 54a. FIG. 10 shows the same step numbers as FIG. 9 for the same processes.

The PU 52 may execute S60 to S64 and then finish the FIG. 10 process upon completion of S66 and S68. If the Z-axis coordinate component of the end of the workpiece W is smaller than the Z-axis coordinate component of the cut-off tool 22 (1) before commencing S66, cutting off the workpiece W with the cut-off tool 22 (1) would fail, thus producing a defective product whose axial length is shorter to be output first among the products continuously output in S68.

The effect of the embodiment is being described. The code data group 54b stored in the ROM 54 of the controller 50 may include the workpiece position abnormality detection code defining the FIG. 7 process, which allows the user of the working machine 10 to describe the machining program 56a including the FIG. 7 process as shown in FIG. 9. The workpiece position abnormality detection code may determine whether the end of the workpiece W is in the normal position within the predetermined area A before commencing top-cut. Such machining program 56a could prevent a defective product first produced among plural products made of the single workpiece W regardless of supply accuracy of the bar feeder 40.

The elements described in the embodiment correspond to the elements described in the summary as follows: The machine tool may correspond to the lathe 1. The cutting unit may correspond to the cutting tool 22. The sensor may correspond to the cut-off tool breakage detection apparatus 30. The abnormality detection process may correspond to the S20 to S24 steps. The retry process may correspond to the S30 and S32 steps. The predetermined direction may correspond to the positive direction of the Z-axis. Setting the number of retries may correspond to the S40 and S42 steps. Setting the displacement amount may correspond to the S46 and S48 steps. The abnormality measures may correspond to the S34 and S36 steps. The cut-off tool breakage detection process may correspond to the S10 to S14 steps. The executing unit may correspond to the PU52. The storage apparatus may correspond to the ROM 54. The detector may correspond to the probe 32. The sensor may correspond to the non-contact sensor 80.

Modified Embodiments: The invention can be implemented in a modified embodiment. The embodiment and the modified embodiment can be combined as far as they are not technically contradictory to each other.

### [Retry Process]

The maximum number of retries Cth may be set by the user but not necessarily. The parameter setting process may be optional.

The displacement amount "+ΔZ" of the workpiece W may be set by the user but not necessarily. The parameter setting process may be optional.

The retry process may be optional.

### [Setting number of retries]

In the event that no instruction is given by the user (S40: FIG. 8), the PU 52 may substitute the default Cth0 for the number of retries Cth but not necessarily. Only the input by the user may trigger the retry process.

### [Setting displacement amount]

In the event that no instruction is given by the user (S46: FIG. 8), the PU 52 may substitute the default ΔZ0 for the displacement amount ΔZ but not necessarily. Only the input by the user may trigger the retry process.

### [Abnormality Measures]

The abnormality measures taken in the event of workpiece position abnormality may include both of the S34 and S36 steps but not necessarily. One of the steps may be optional.

### [Workpiece position abnormality detection code]

The workpiece position abnormality detection code may contain subsets of the codes; a code for giving instructions for executing the S20 to S24 steps, a code for giving instructions for executing the S26 to S32 steps, and a code for giving instructions for executing the S34 to S36 steps. The user can separately select at least one of the codes; the code for giving instructions for executing the workpiece position abnormality detection, the code for giving instructions for executing the retry process, and the code for giving instructions for executing the abnormality measures. The code for giving instructions for executing the abnormality measures may be common to, for example, a code for giving instructions for executing the abnormality measures taken in the event of cut-off tool breakage as described below.

For example, the code for giving instructions for executing the workpiece position abnormality detection may be included in the code for giving instructions for executing top-cut.

### [Cut-off tool breakage detection code]

The cut-off tool breakage detection code may contain subsets of the codes; a code for giving instructions for executing the S10 to S14 steps and a code for giving instructions for executing the S16 to S18 steps. The user can separately select at least one of the codes; the code for giving instructions for executing the cut-off tool breakage detection and the code for giving instructions for executing the abnormality measures.

For example, the code for giving instructions for executing the cut-off tool breakage detection may be included in the code for giving instructions for the cut-off tool.

### [Code data]

The code data may include both of the cut-off tool breakage detection code or the subsets of the codes and the workpiece position abnormality detection code or the subsets of the codes but not necessarily. For example, the cut-off tool breakage detection code may be optional if a sensor is specially provided to detect workpiece position abnormality as described below.

The controller may execute the machining program written by a combination of the code data but not necessarily. The controller may be a control apparatus specially designed to execute a series of predetermined processes to machine the workpiece W. The workpiece position abnormality detection process may be still available prior to top-cut.

### [Detector]

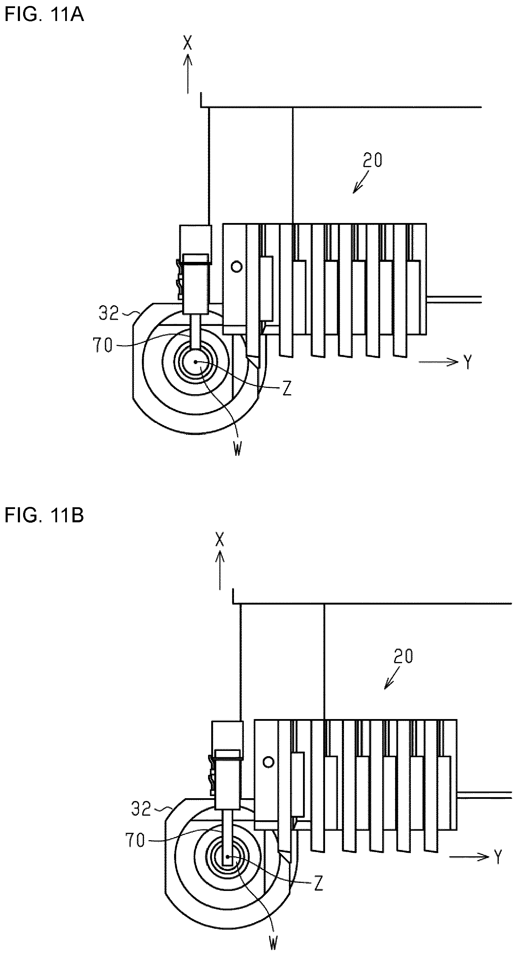

The detector may be the probe 32 shown in FIG. 2 but not necessarily. A cylinder 70 in FIG. 11A and FIG. 11B may be available. FIG. 11A shows the state the workpiece W exists in the predetermined area A. FIG. 11B shows the state the workpiece W does not exist in the predetermined area A. The detector using the cylinder 70 may be a lead switch or a magnet-type cylinder position detector.

### [Sensor]

The sensor capable of detecting an object in the predetermined area A may be the cut-off tool breakage detection apparatus 30 but not necessarily. An apparatus having the same structure as that of the breakage detection apparatus 30 may be provided as an apparatus for use in the workpiece position abnormality detection prior to top-cut.

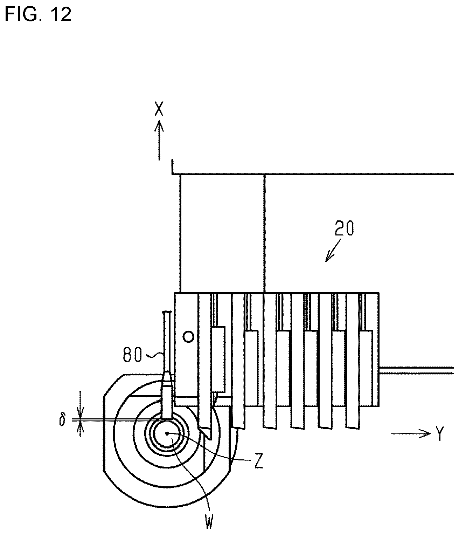

The sensor capable of detecting an object in the predetermined area A may be the contact sensor bringing the detector into the area to detect contact with the object, but not necessarily. A non-contact sensor 80 in FIG. 12 may be available. The non-contact sensor 80 arranged outside the predetermined area A could detect the workpiece W in the area at δ intervals between the sensor 80 and the workpiece W.

The non-contact sensor 80 may be provided with a sensor coil. High frequency magnetic flux across the sensor coil would cause an occurrence of overcurrent in the workpiece W. The magnitude of overcurrent depends on the intervals between the sensor coil and the workpiece W. Sensor coil impedance is variable on the magnitude of overcurrent. Detection of impedance could therefore reveal the position of the workpiece W, thus determine whether the workpiece W exists in the predetermined area A. The non-contact sensor 80 may be the sensor as described above but not necessarily. The non-contact sensor may include a laser displacement gauge and a proximity sensor.

The sensor may be mounted on the tool post 20 but not necessarily. The sensor capable of detecting an object in the predetermined area A may include a sensor capable of detecting a load applied to the cut-off tool 22 (1) during top-cut. Such sensor may detect a load applied to the tool post 20 during displacement thereof. The load applied to the tool post 20 may rely on motor current of the motor that controls the displacement speed of the tool post 20. The load applied to the tool post 20 may rely on the displacement speed and the motor current if a predetermined voltage is applied to the motor to displace the tool post 20. The sensor may include a sensor capable of detecting torque transmission between the spindle 14 and a back spindle in contact with the end of the workpiece W to determine that the workpiece W is in the normal position.

### [Cutting unit]

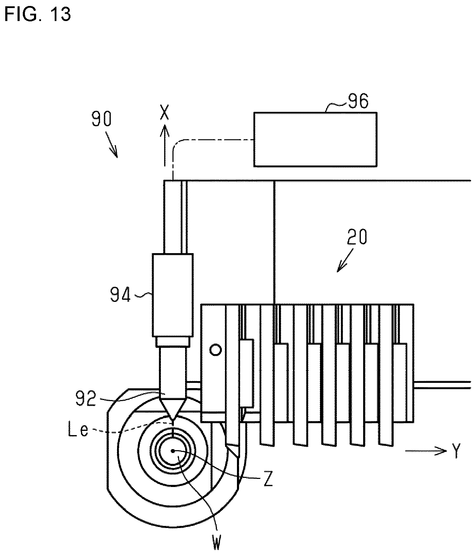

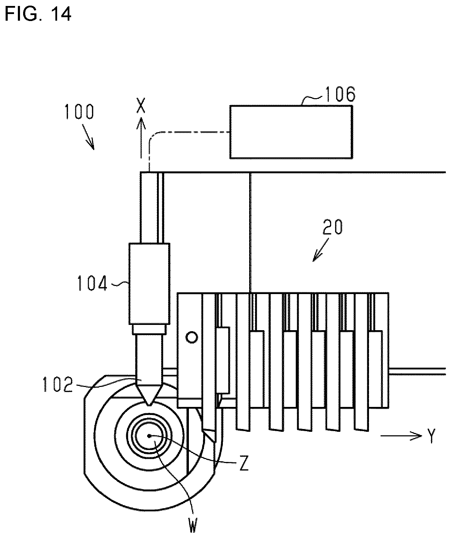

The cutting unit may be the cutting tool 22 but not necessarily. A laser cutter 90 in FIG. 13 may be also available. The laser cutter 90 may include a laser nozzle 92, a condenser 94, and an oscillator 96. Electromagnetic wave of predetermined frequency from the oscillator 96 may be transmitted to the condenser 94 and then output as laser beam Le from the laser nozzle 92. A water jet cutter 100 in FIG. 14 may be also available. The water jet cutter 100 may include a water jet nozzle 102, a water jet head 104, and a high pressure pump 106. High pressure liquid from the high pressure pump 106 may be output toward the workpiece W from the water jet nozzle 102 through the water jet head 104.

### [Executing apparatus]

The executing apparatus may be an apparatus capable of executing software processes but not necessarily. The executing apparatus may be provided with a specially designed hardware circuit such as ASIC (Application Specific Integrated Circuit) capable of executing at least part of the processes. The executing apparatus may necessarily include at least one of the configurations; (a) a processing circuit provided with a processor capable of executing all the processes in accordance with a program and a program storing device such as a memory, (b) a processing circuit provided with a processor capable of executing part of the processes in accordance with a program, a program storing device, and a specially designed hardware circuit capable of executing the other of the processes, and (c) a processing circuit provided with a specially designed hardware circuit capable of executing all the processes.

One or more software executing apparatuses may be provided. One or more specially designed hardware circuits may be provided.

### [Controller]

The feeder controller 42 and the machining controller 50 may be separately provided but not necessarily. They may be integrated.

### [Others]

The storage apparatus for the control program 54a and the storage apparatus for the code data group 54b may be the same but not necessarily. The storage apparatus for the control program 54a and the code data group 54b and the storage apparatus for the machining program 56a may be separate but not necessarily.

### DESCRIPTION OF SYMBOLS

- 1: lathe
- 10: working machine
- 12: bed
- 14: spindle
- 16: chuck
- 18: guide bush
- 20: tool post
- 22: cutting tool
- 30: breakage detection apparatus
- 32: probe
- 34: object
- 36: contact sensor
- 38: resilient member
- 40: bar feeder
- 40a: actuator
- 40b: end detection sensor
- 42: feeder controller
- 50: machining controller

## Claims

1. A machine tool comprising:
a spindle capable of rotating a bar workpiece around its axis;
a cutter capable of cutting the workpiece at a surface perpendicular to the axis;
a sensor capable of detecting an object existing in an area where the cutter is located to cut the workpiece; and
a controller adapted to execute an abnormality detection process prior to a top cut process of the workpiece,
wherein the abnormality detection process comprises an abnormality determination process capable of determining that the object does not exist in the area according to a detection value of the sensor and thereby determining that the machine tool is not ready for the top cut process.

2. The machine tool of claim 1, wherein the controller is adapted to execute a retry process in the event that the abnormality detection process reveals occurrence of abnormality, the retry process comprising a process of displacing the workpiece in a predetermined direction by a predetermined amount and the predetermined direction being a direction that the workpiece approaches the area where the cutter is located to cut the workpiece, and the abnormality detection process further comprises another abnormality determination process capable of determining whether the object exists in the area after the retry process according to a detection value of the sensor.

3. The machine tool of claim 2, wherein the controller is adapted to execute a number of retries setting process, the number of retries setting process comprising a process of receiving a user instruction of the number of retries through an interface and the number of retries being an upper limit of the number of retries of the abnormal detection process and the retry process, and the controller is adapted to repeat the retry process within the upper limit until the abnormality detection process reveals no occurrence of abnormality.

4. The machine tool of claim 2, wherein the controller is adapted to execute a displacement amount setting process, the displacement amount setting process comprising a process of receiving a user instruction of a displacement amount of the workpiece through an interface, and the retry process comprises a process of displacing the workpiece by the displacement amount received in the displacement amount setting process.

5. The machine tool of claim 2, wherein the controller is adapted to execute an abnormality measures process in the event that the abnormality detection process reveals occurrence of abnormality after the retry process, the abnormality measures process comprising a process of outputting an alarm and shutting off a working machine comprising the cutter and the spindle.

6. The machine tool of claim 1, the cutter comprising a cut-off tool and the sensor comprising a sensor capable of detecting the object existing in the area where the cut-off tool is located to cut the workpiece, wherein the controller is adapted to execute a cut-off tool breakage detection process after a cut-off process to determine that the sensor detects the object exists in the area and threby determine that the cut-off tool is broken.

7. The machine tool of claim 1, the controller comprising an executing apparatus and a storage apparatus and wherein the controller is adapted to receive a machining program input by a user through an interface, the storage apparatus storing a plurality of code data and the machining program being a selective combination of the code data to instruct the executing apparatus to control a working machine comprising the cutter and the spindle, and the code data comprises a code for instructing the executing apparatus to execute the abnormality detection process.

8. The machine tool of claim 1, the sensor comprising a detector capable of outputting a singal according to the detection value when the detector is displaced into the area where the cutter is located to cut the workpiece.

9. The machine tool of claim 1, the sensor comprising a non-contact sensor capable of detecting the object existing in the area where the cutter is located to cut the workpiece.

10. A method of machining a workpiece comprising executing the processes in the machine tool of claim 2.
